# EUROPÄISCHE PATENTSCHRIFT

(11) **EP 1 419 949 B1**
(45) Veröffentlichungstag und Bekanntmachung des Hinweises auf die Patenterteilung: **12.08.2009**
(21) Anmeldenummer: 03026096.2
(22) Anmeldetag: 13.11.2003
(51) Int. Cl.: B60T 17/02

(54) **Kompressoranordnung mit einer Zusatzverdichtereinheit, insbesondere für Nutzfahrzeuge**
Compressor arrangement with a supplementary compressor, in particular for heavy-duty vehicles
Dispositif de compression avec un compresseur supplémentaire, en particulier pour des véhicules lourds

(30) Priorität: 14.11.2002 DE 10252975
(43) Veröffentlichungstag der Anmeldung: 19.05.2004
(73) Patentinhaber: KNORR-BREMSE SYSTEME FÜR NUTZFAHRZEUGE GMBH, 80809 München (DE)
(72) Erfinder: Dörr, Wolfgang, 82223 Eichenau (DE); Gerum, Eduard Dr., 83026 Rosenheim (DE)

(56) Entgegenhaltungen:
- EP-A- 0 165 376
- EP-A- 0 496 958
- DE-C- 720 050
- US-A- 1 376 467

## Beschreibung

Die vorliegende Erfindung betrifft eine Kompressoranordnung, insbesondere für Nutzfahrzeuge, mit einem Verbrennungsmotor zur Erzeugung einer Drehbewegung, der eine nachgeschaltete Verdichtereinheit zur Erzeugung von Druckluft aus der Umgebungsluft antreibt, wobei eine Steuereinheit die Drucklufterzeugung bei Druckluftbedarf auslöst.

Insbesondere auf dem Gebiet des Nutzfahrzeugbaus kommen derartige Kompressorenanordnungen zur Anwendung, um die Druckluftbeschaffung des bordeigenen Druckluftsystems eines Nutzfahrzeuges auszuführen. Das Druckluftsystem an Bord eines Nutzfahrzeuges wird insbesondere zur Versorgung der Bremsanlage, der Luftfederung, des Anhängers und diverser Nebenverbraucher benötigt. Von der Kompressoranordnung eines Nutzfahrzeuges wird hierfür Druckluft von etwa 12,5 bar erzeugt.

Die Produktinformation "Hochleistungs-Kompressoren" der Firma KNORR-BREMSE Systeme für Nutzfahrzeuge GmbH (Druck-Nr. P-3505-DE-01) offenbart eine Verdichtereinheit, die nach Art eines Kolbenverdichters ausgebildet ist. Eine in einem Verdichtergehäuse drehend gelagerte Kurbelwelle setzt eine eingangsseitige Drehbewegung mittels des Prinzips eines Kurbeltriebs in eine lineare Hin- und Herbewegung eines zugeordneten, in einem Zylinder untergebrachten Kolbens um, der im Zusammenwirken mit einer im Zylinderdeckel untergebrachten Ventileinrichtung Umgebungsluft ansaugt und diese anschließend verdichtet abgibt. Die Verdichtereinheit ist in einer ein- oder mehrzylindrigen Ausführungsvariante erhältlich. Die mehrzylindrige Ausführungsvariante eignet sich für Druckluftsysteme mit einem relativ hohen Druckluftverbrauch und weist dementsprechend eine höhere Förderleistung auf.

Die Verdichtereinheit wird in allgemein bekannter Weise über die Verbrennungskraftmaschine des Nutzfahrzeuges angetrieben. In den meisten Anwendungsfällen ist zwischen der Verbrennungskraftmaschine und der Verdichtereinheit eine drehzahlübersetzende Getriebeeinheit zwischengeschaltet. Die Getriebeeinheit ist dabei als Stirnradgetriebe mit einem festen Übersetzungsverhältnis ausgebildet, um die von der Verbrennungskraftmaschine erzeugte Drehzahl bis zu einem Übersetzungsverhältnis von normalerweise 1,5 ins Schnelle zu übersetzen, damit die abtriebsseitig der Getriebeeinheit angebrachte Verdichtereinheit mit der zulässigen Drehzahl betrieben werden kann. Die Getriebeeinheit der Verdichtereinheit wird meist direkt in das Fahrzeuggetriebe des Nutzfahrzeuges integriert.

Solche Kompressoranordnungen des Standes der Technik sind außerdem mit technischen Maßnahmen zur Energieeinsparung ausgestattet. So erfolgt der Betrieb der vorstehend beschriebenen, bekannten Kompressoranordnung über eine Steuerung, welche gewährleistet, dass die Verdichtereinheit nur dann in Betrieb genommen wird, wenn ein Druckluftbedarf im Druckluftsystem des Nutzfahrzeuges besteht. Der Druckluftbedarf wird in den meisten Fällen über einen mit dem Systemdruck in Verbindung stehenden Drucksensor ermittelt. Sinkt der Systemdruck unter einen vorgegebenen Schwellendruck, so wird die Verdichtereinheit in Betrieb genommen, um wieder einen ausreichenden Luftdruck aufzubauen. Zur Speicherung des aufgebauten Drucks werden bei dem Druckluftsystem gewöhnlich Druckbehälter eingesetzt.

Um eine solche Bedarfssteuerung für die Inbetriebnahme der Verdichtereinheit zu realisieren, ist die Verdichtereinheit zwischen einer Förderphase und einer Leerlaufphase umschaltbar. In der Förderphase wird Druckluft aus der Umgebungsluft erzeugt und in das Druckluftsystem gespeist. Dem gegenüber läuft die Verdichtereinheit in der Leerlaufphase ohne Last, so dass zwar eine Kolbenbewegung ausgeführt wird, jedoch keine Druckluft in das Druckluftsystem gelangt. Diese wird dann nach außen abgeführt. Da in der Leerlaufphase aufgrund der wegfallenden Last gegenüber der Förderphase sehr viel weniger Leistung durch die Verdichtereinheit aufgenommen wird, trägt diese Art von Luftbedarfssteuerung zur Energieeinsparung bei.

Langzeituntersuchungen haben jedoch gezeigt, dass diese luftbedarfsgesteuerte Kompressoranordnung oft mit sehr geringen Einschaltdauern von 5 - 10 % in der Förderphase betrieben wird, was durch den überwiegenden Fernverkehrsbetrieb auf der Autobahn zurückzuführen ist. Bei dieser kleinen Einschaltdauer gewinnt die dem gegenüber hohe Einschaltdauer von ca. 90% in der Leerlaufphase stark an Gewicht, so dass wegen der immer noch beträchtlichen Leistungsaufnahme in der Leerlaufphase der Energieverbrauch im Leerlaufbetrieb insgesamt höher ist als im Lastbetrieb. Dieses Ergebnis wird auch dadurch verstärkt, dass die Verdichtereinheit für den Normalbetrieb oft überdimensioniert ist, um innerhalb kürzester Zeit einen hohen Druck im Druckluftsystem zu erzeugen. Dies ist insbesondere beim Befüllen des Druckluftsystems bei leeren Druckbehältern, der Betätigung von Liftachsen, etc. der Fall. Insgesamt führt die bekannte Luftbedarfssteuerung hinsichtlich der Energieeinsparung also noch zu recht unbefriedigenden Ergebnissen.

Im Stand der Technik ist weiterhin auch eine Luftbedarfssteuerung einer Kompressoranordnung allgemein bekannt, die sich einer mechanisch betätigbaren Trennkupplung zwischen der Motoreinheit und der Verdichtereinheit bedient. Mit der Trennkupplung wird die Verdichtereinheit dann zum Stillstand gebracht, wenn ein Druckluftbedarf nicht besteht. Allerdings unterliegt eine derartig betriebene Verdichtereinheit im Vergleich zu einem dauernden Leerlauf einem recht hohen Verschleiß, begründet durch mangelnde Schmierwirkung beim Kaltstart. Weiterhin unterliegt auch die für diese Luftbedarfssteuerung erforderliche mechanisch betätigbare Trennkupplung einem Verschleiß, so dass bei dieser alternativen bekannten Lösung zur Energieeinsparung insgesamt ein recht hoher Wartungsaufwand besteht.

Es ist daher die Aufgabe der vorliegenden Erfindung eine luftbedarfsgesteuerte Kompressoranordnung der eingangs beschriebenen Art dahingehend weiter zu verbessern, dass eine effektivere Energieeinsparung der Kompressoranordnung bei gleichzeitig minimalem Wartungsaufwand gewährleistet wird.

Die Aufgabe wird ausgehend von einer luftbedarfsgesteuerten Kompressoranordnung gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass eine bezüglich der verbrennungsmotorbetriebenen Verdichtereinheit fluidisch parallelgeschaltete und von einem Elektromotor angetriebene Zusatzverdichtereinheit zur Deckung von Bedarfsspitzen an Druckluft vorgesehen ist, wobei die Steuereinheit die Zusatzverdichtereinheit im Falle einer ermittelten Bedarfsspitze in Betrieb nimmt.

Der Vorteil der erfindungsgemäßen Lösung liegt insbesondere darin, dass eine kleiner dimensionierte (Haupt-)Verdichtereinheit verwendet werden kann, die durch den Verbrennungsmotor des Nutzfahrzeuges angetrieben wird. Eine solche verbrennungsmotorbetriebene Verdichtereinheit kleinerer Dimension besitzt in der Leerlaufphase eine entsprechend geringere Leistungsaufnahme und kann in der Lastphase effektiver, nämlich mit höherer Einschaltdauer, betrieben werden. Die kleiner dimensionierte verbrennungsmotorbetriebene Verdichtereinheit benötigt weiterhin auch einen geringeren Bauraum im Motorraum des Nutzfahrzeuges.

Vorzugsweise steuert die Steuereinheit die Zusatzverdichtereinheit direkt durch An- und Ausschalten des vorgeschalteten Elektromotors an. Diese Art der Ansteuerung bewirkt, dass die Zusatzverdichtereinheit in der Leerlaufphase überhaupt keine Leistung aufnimmt, was zu einer weiteren Energieeinsparung führt. Die Steuereinheit ist vorzugsweise in die herkömmliche elektronische Luftaufbereitungseinheit des Nutzfahrzeuges (EAC = "Electronic Air Control") intergriert.

Gemäß einer weiteren die Erfindung verbessernden Maßnahme ist die Zusatzverdichtereinheit samt Elektromotor als Systemmodul im Rahmen der Kompressoranordnung ausgebildet, so dass dieses Systemmodul je nach Applikation optional an eine im Bereich eines abzweigenden Anschlussstutzens sperrbare Druckluftleitung anschließbar ist. Diese Maßnahme führt zu einem geringeren Applikationsaufwand bei der verbrennungsmotorbetriebenen Verdichtereinheit, da der selbe Typ einer Verdichtereinheit bei einer breiteren Fahrzeugvariante eingesetzt werden kann. Abhängig vom Typ des Nutzfahrzeuges bzw. dem herrschenden Luftbedarf kann in einfacher Weise zusätzlich noch eine elektrisch angetriebene Zusatzverdichtereinheit installiert werden oder nicht. Hierfür ist lediglich zu beachten, dass ― vorzugsweise im Bereich der die verbrennungsmotorbetriebene Verdichtereinheit verlassenden Druckluftleitung ― ein entsprechender Anschlussstutzen für die elektromotorbetriebene Zusatzverdichtereinheit vorgesehen wird.

Weiterhin wird vorgeschlagen, dass das aus Zusatzverdichtereinheit und Elektromotor bestehende Systemmodul an der Chassis des Nutzfahrzeuges lösbar befestigt ist. Diese lösbare Verbindung kann vorzugsweise in Form einer Schraubverbindung hergestellt werden, die eine einfache Montage und Demontage gewährleistet.

Vorzugsweise ist zwischen dem Verbrennungsmotor und der Verdichtereinheit eine Getriebeeinheit zwischengeschaltet. Die Getriebeeinheit dient zur Anpassung des Drehzahlspektrums der Verdichtereinheit an das Drehzahlspektrum des Verbrennungsmotors.

Genauso kann bei Bedarf auch zwischen dem Elektromotor und der Zusatzverdichtereinheit eine Getriebeeinheit zwischengeschaltet werden, um das Drehzahlspektrum der Zusatzverdichtereinheit an das Drehzahlspektrum des Elektromotors anzupassen. Diese Getriebeeinheit kann ferner auch direkt in den Elektromotor integriert sein, der insoweit als standardisierter elektrischer Getriebemotor ausgeführt ist. Der als elektrischer Getriebemotor ausgebildete Elektromotor zum Antrieb der Zusatzverdichtereinheit lässt sich zudem auch in besonders einfacher Weise mit der Zusatzverdichtereinheit zu einem Systemmodul zusammenfügen.

Gemäß einer weiteren, die Erfindung verbessernde Maßnahme ist vorgesehen, dass das Auffüllen eines leeren Druckbehälters ― beispielsweise nach einem langen Stillstand eines Nutzfahrzeuges über Nacht ― bis zu einem ausreichenden, über die Steuereinheit festlegbaren Druckniveau ausschließlich unter Verwendung der elektromotorbetriebenen Zusatzverdichtereinheit erfolgt. Somit wird eine Förderung von Druckluft selbst beim Stillstand des Verbrennungsmotors über die Fahrzeugbatterie möglich. Das Auffüllen des Druckbehälters zur Inbetriebnahme eines Nutzfahrzeuges kann somit unter minimaler Geräuschentwicklung vollzogen werden, was vor allem bei in Wohngebieten über Nacht abgestellten Nutzfahrzeugen wünschenswert ist. Das Auffüllen des leeren Druckbehälters kann dabei zeitgesteuert über die Steuereinheit vorgenommen werden. Über eine festgelegte Zeitdauer wird die elektromotorbetriebene Zusatzverdichtereinheit in Betrieb genommen, so dass ein nach Ablauf dieser Zeitdauer ausreichendes Druckniveau im Druckbehälter erzeugt ist, das eine sofortige Abfahrt des Nutzfahrzeuges ermöglicht, ohne dass die verbrennungsmotorbetriebene Verdichtereinheit noch eine weitere Zeitdauer benötigt, um weitere Druckluft zu erzeugen.

Gemäß einer weiteren die Erfindung verbessernden Maßnahme kann die elektromotorbetriebene Zusatzverdichtereinheit bei Ausfall der verbrennungsmotorbetriebenen Verdichtereinheit im Sinne eines redundanten Systems eine Notfunktion übernehmen. Dies wird durch die Steuereinheit ausgelöst, die bei Ausfall der verbrennungsmotorbetriebenen Verdichtereinheit den Druckluftbedarf zumindest teilweise durch Ansteuerung der elektromotorbetriebenen Zusatzverdichtereinheit deckt.

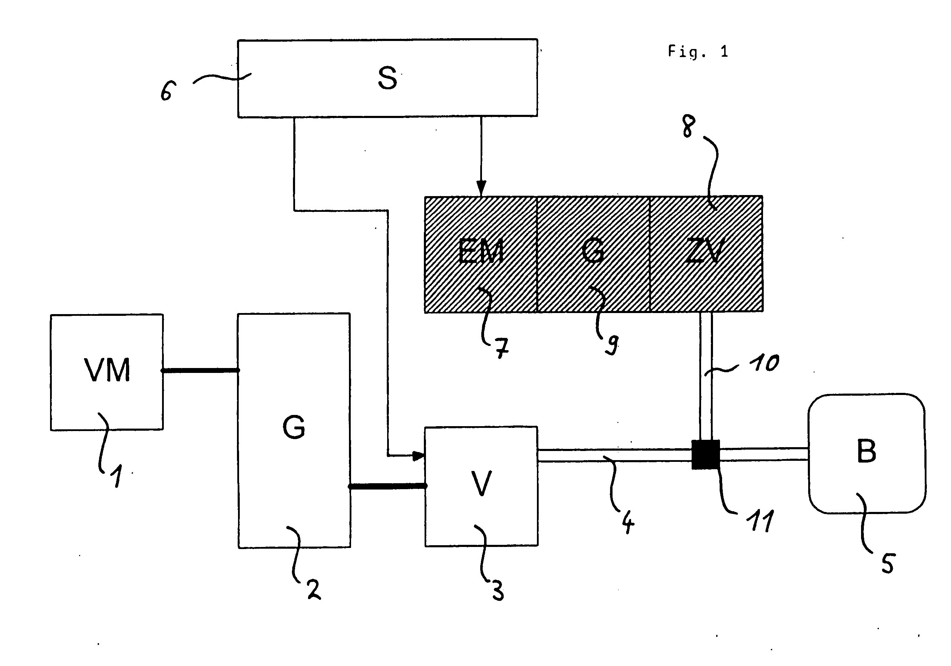

Weitere die Erfindung verbessernde Maßnahmen werden nachstehend gemeinsam mit der Beschreibung eines bevorzugten Ausführungsbeispiels der Erfindung anhand der einzigen Figur näher dargestellt. Die Figur zeigt eine schematische Prinzipdarstellung des Aufbaus einer erfindungsgemäßen Kompressoranordnung in Form eines Blockschaltbildes.

Die Kompressoranordnung besteht im Wesentlichen aus einem Verbrennungsmotor 1 zur Erzeugung einer Drehbewegung, die einer nachgeschalteten Getriebeeinheit 2 zugeführt wird, um die Drehzahl des Verbrennungsmotors 1 entsprechend der erforderlichen Drehzahl für eine nachgeschaltete Verdichtereinheit 3 anzupassen, das heißt zu übersetzen. Die Getriebeeinheit 2 ist hier als Stirnradgetriebe ausgebildet. Die abtriebsseitig der Getriebeeinheit 2 angeordnete Verdichtereinheit 3 nutzt die eingangsseitige Drehbewegung in herkömmlicher Weise zur Erzeugung von Druckluft aus der Umgebungsluft. Die Verdichtereinheit 3 ist in diesem Ausführungsbeispiel als an sich bekannter Kolbenverdichter ausgebildet. Die von der Verdichtereinheit 3 erzeugte Druckluft wird ausgangsseitig über eine Druckluftleitung 4 einem Druckbehälter 5 eines ― hier nicht weiter dargestellten ― Druckluftsystem des Nutzfahrzeuges zur Verfügung gestellt.

Weiterhin ist eine Steuereinheit 6 vorgesehen, die die Drucklufterzeugung der Kompressoranordnung in herkömmlicher Weise auslöst, so dass sich nähere Ausführungen hierzu an dieser Stelle erübrigen.

Parallel zu der verbrennungsmotorbetriebenen Verdichtereinheit 3 umfasst die Kompressoranordnung eine von einem Elektromotor 7 angetriebene Zusatzverdichtereinheit 8. Die Zusatzverdichtereinheit 8 dient zur Deckung von Bedarfsspitzen an Druckluft, welche von der verbrennungsmotorbetriebenen Verdichtereinheit 3 nicht bedient werden können. Hierfür nimmt die Steuereinheit 6 die Zusatzverdichtereinheit 8 im Falle einer ermittelten Bedarfsspitze in Betrieb. Diese Bedarfsspitze kann beispielsweise über einen ― hier nicht weiter gezeigten ― den Systemdruck detektierenden Drucksensor in Verbindung mit einer Auswertung in der Steuereinheit 6 ermittelt werden. Die Steuereinheit 6 steuert die Zusatzverdichtereinheit 8 indirekt durch An- und Ausschalten des vorgeschalteten Elektromotors 7 an. Zwischen dem Elektromotor 7 und der Zusatzverdichtereinheit 8 ist eine Getriebeeinheit 9 vorgesehen, um das Drehzahlspektrum der Zusatzverdichtereinheit 8 an das Drehzahlspektrum des Elektromotors 7 anzupassen. Die ausgangsseitig der Zusatzverdichtereinheit 8 vorgesehene Druckluftleitung 10 mündet in einen von der Druckluftleitung 4 abzweigenden Anschlussstutzen 11 ein. Der Anschlussstutzen 11 ist über eine entsprechende Ventilanordnung sperrbar, um das aus Zusatzverdichtereinheit 8 mit Getriebeeinheit 9 und Elektromotor 7 bestehende Systemmodul (schraffiert) je nach Applikation optional an den abzweigenden Anschlussstutzen 11 anzuschließen.

Hiermit wird eine fluidisch parallelgeschaltete Druckluftspeisung des Druckbehälters 5 durch die verbrennungsmotorbetriebene Verdichtereinheit 3 sowie die Zusatzverdichtereinheit 8 gewährleistet, welche über die Steuereinheit 6 unter der Prämisse der Energieeinsparung koordiniert angesteuert werden. Somit können Bedarfsspitzen an Druckluft, welche von der verbrennungsmotorbetriebenen Verdichtereinheit 2 nicht mehr gedeckt werden können, durch die elektromotorbetriebene Zusatzverdichtereinheit 8 gedeckt werden. Die Energieeinsparung resultiert aus einer kleiner zu dimensionierenden Verdichtereinheit 3, die insbesondere während ihrer Leerlaufphase eine relativ geringe Leistungsaufnahme besitzt, was insgesamt zur Energieeinsparung beiträgt.

### Bezugszeichenliste

- **1**: Verbrennungsmotor
- **2**: Getriebeeinheit
- **3**: Verdichtereinheit
- **4**: Druckluftleitung
- **5**: Druckbehälter
- **6**: Steuereinheit
- **7**: Elektromotor
- **8**: Zusatzverdichtereinheit
- **9**: Getriebeeinheit
- **10**: Druckluftleitung
- **11**: Anschlussstutzen

## Patentansprüche

1. Verbrennungsmotor (1) zur Erzeugung einer Drehbewegung, der eine nachgeschaltete Verdichtereinheit (3) zur Erzeugung von Druckluft aus der Umgebungsluft antreibt, wobei eine Steuereinheit (6) die Drucklufterzeugung bei Drückluftbedarf auslöst,
**dadurch gekennzeichnet, dass** eine bezüglich der verbrennungsmotorbetriebenen Verdichtereinheit (3) fluidisch parallelgeschaltete und von einem Elektromotor (7) angetriebene Zusatzverdichtereinheit (8) zur Deckung von Bedarfsspitzen an Druckluft vorgesehen ist, wobei die Steuereinheit (6) die Zusatzverdichtereinheit (8) im Falle einer ermittelten Bedarfsspitze in Betrieb nimmt.

2. Kompressoranordnung nach Anspruch 1,
**dadurch gekennzeichnet, dass** die Steuereinheit (6) die Zusatzverdichtereinheit (8) indirekt durch An- und Ausschalten des vorgeschalteten Elektromotors (7) ansteuert.

3. Kompressoranordnung nach Anspruch 1,
**dadurch gekennzeichnet, dass** die Zusatzverdichtereinheit (8) samt Elektromotor (7) als Systemmodul ausgebildet ist, das je nach Applikation optional an eine im Bereich eines abzweigenden Anschlussstutzens (11) sperrbare Druckluftleitung (4) anschließbar ist.

4. Kompressoranordnung nach Anspruch 3,
**dadurch gekennzeichnet, dass** das aus Zusatzverdichtereinheit (8) und Elektromotor (7) bestehende Systemmodul an der Chassis eines Nutzfahrzeuges lösbar befestigbar ist.

5. Kompressoranordnung nach Anspruch 1,
**dadurch gekennzeichnet, dass** zwischen dem Verbrennungsmotor (1) und der Verdichtereinheit (3) eine Getriebeeinheit (2) vorgesehen ist, um das Drehzahlspektrum der Verdichtereinheit (3) an das Drehzahlspektrum des Verbrennungsmotors (1) anzupassen.

6. Kompressoranordnung nach Anspruch 1,
**dadurch gekennzeichnet, dass** zwischen dem Elektromotor (7) und der Zusatzverdichtereinheit (8) eine Getriebeeinheit (9) vorgesehen ist, um das Drehzahlspektrum der Zusatzverdichtereinheit (8) an das Drehzahlspektrum des Elektromotors (7) anzupassen.

7. Kompressoranordnung nach einem der vorstehenden Ansprüche,
**dadurch gekennzeichnet, dass** die Verdichtereinheit (3) sowie die Zusatzverdichtereinheit (8) mit einem fluidisch nachgeschalteten Druckbehälter (5) zur Speicherung von Druckluft in Verbindung stehen.

8. Kompressoranordnung nach Anspruch 7,
**dadurch gekennzeichnet, dass** das Auffüllen des leeren Druckbehälters (5) bis zu einem ausreichenden, über die Steuereinheit (6) festlegbaren Druckniveau bei Stillstand des Verbrennungsmotors (1) ausschließlich unter Verwendung der elektromotorbetriebenen Zusatzverdichtereinheit (8) erfolgt.

9. Kompressoranordnung nach Anspruch 8,
**dadurch gekennzeichnet, dass** das Auffüllen des leeren Druckbehälters (5) zeitgesteuert über die Steuereinheit (6) erfolgt.

10. Kompressoranordnung nach einem der vorstehenden Ansprüche,
**dadurch gekennzeichnet, dass** die Steuereinheit (6) bei Ausfall der verbrennungsmotorbetriebenen Verdichtereinheit (3) den Druckluftbedarf im Umfang einer Notfunktion zumindest teilweise durch Ansteuerung der elektromotorbetriebenen Zusatzverdichtereinheit (8) deckt.

11. Kompressoranordnung nach einem der vorstehenden Ansprüche,
**dadurch gekennzeichnet, dass** die elektromotorisch betriebene Zusatzverdichtereinheit (8) nach Art einer zweistufigen Verdichtereinheit ausgebildet ist.

12. Kompressoranordnung nach einem der vorstehenden Ansprüche,
**dadurch gekennzeichnet, dass** die Steuereinheit (6) in die elektronische Luftaufbereitungseinheit des Nutzfahrzeuges integrierbar ist.

## Claims

1. Internal-combustion engine (1) for generating a rotary movement, which drives a downstream compressor unit (3) for generating compressed air from the ambient air, with a controller (6) triggering the generation of compressed air whenever compressed air is demanded,
**characterised in that** an ancillary compressor unit (8), which is connected in parallel in terms of fluidics with respect to said compressor unit (3) driven by the internal-combustion engine and which is driven by an electric motor (7) for covering compressed-air demand peaks, with said controller (6) starting the operation of said ancillary compressor unit (8) in the event of an established demand peak.

2. Compressor system according to Claim 1,
**characterised in that** said controller (6) controls said ancillary compressor unit (8) indirectly by turning said electric motor (7) connected upstream on and off.

3. Compressor system according to Claim 1,
**characterised in that** said ancillary compressor unit (8), inclusive of said electric motor (7) is configured as system module which is adapted to be optionally connected to a compressed-air line (4), depending on the application, which line is adapted to be blocked in the region of a branching-off connecting tubulure (11).

4. Compressor system according to Claim 3,
**characterised in that** said system module composed of said ancillary compressor unit (8) and said electric motor (7) is adapted to be detachably fastened on chassis of a commercial vehicle.

5. Compressor system according to Claim 1,
**characterised in that** a transmission unit (2) is provided between said internal-combustion engine (1) and said compressor unit (3) for adapting the range of rotational speeds of said compressor unit (3) to the range of rotational speeds of said internal-combustion engine (1).

6. Compressor system according to Claim 1,
**characterised in that** a transmission unit (9) is provided between said electric motor (7) and said ancillary compressor unit (8) for adapting the range of rotational speeds of said ancillary compressor unit (8) to the range of rotational speeds of said electric motor (7).

7. Compressor system according to any of the preceding Claims,
**characterised in that** said compressor unit (3) as well as said ancillary compressor unit (8) communicate with a pressure tank for accumulating compressed air, which is connected downstream in terms of fluidics.

8. Compressor system according to Claim 7,
**characterised in that** when said internal-combustion engine is out of operation, the empty pressure tank (5) is recharged up to a sufficient pressure level, which can be determined via said controller (6), exclusively with employment of said ancillary compressor unit (8) driven by said electric motor.

9. Compressor system according to Claim 8,
**characterised in that** the empty pressure tank (5) is recharged under timed control via said controller (6).

10. Compressor system according to any of the preceding Claims,
**characterised in that** in the event of failure of said compressor unit (3) driven by said internal-combustion engine, said controller (6) covers the compressed-air demand to the extent of an emergency function at least partly by controlling said ancillary compressor unit (8) driven by said electric motor.

11. Compressor system according to any of the preceding Claims,
**characterised in that** said ancillary compressor unit (8) driven by said electric motor is configured in the manner of a two-stage compressor unit.

12. Compressor system according to any of the preceding Claims,
**characterised in that** said controller (6) is adapted for integration into the electronic air processing unit of the commercial vehicle.

## Revendications

1. Moteur à combustion interne (1) à induire un mouvement rotatif, qui entraîne une unité à compresseur (3) en aval à engendrer de l'air comprimé à partir de l'air ambiant, à une unité de commande (6) déclenchant la production de l'air comprimé, dès que de l'air comprimé est requis,
**caractérisé en ce qu'**une unité à compresseur de complément (8), qui est raccordée en parallèle par voie fluidique par rapport à ladite unité à compresseur (3) entraîné par le moteur à combustion interne et qui est entraînée par un moteur électrique (7) afin de couvrir la demande des crêtes en demande de l'air comprimé, à ladite unité de commande (6) déclenchant le service de ladite unité à compresseur de complément (8) au cas d'un crête établi en demande.

2. Système à compresseur selon la revendication 1,
**caractérisé en ce que** ladite unité de commande (6) commande ladite unité à compresseur de complément (8) indirectement en mettant ledit moteur électrique (7) en et hors service, qui est raccordé en amont.

3. Système à compresseur selon la revendication 1,
**caractérisé en ce que** ladite unité à compresseur de complément (8), ci-inclus ledit moteur électrique (7), est configurée sous forme d'un module de système apte à être raccordé à volonté à un conduit de l'air comprimé (4), selon l'application respective, lequel est apte à être arrêté dans la zone d'une tubulure de raccord branchant (11).

4. Système à compresseur selon la revendication 3,
**caractérisé en ce que** ledit module de système, constitué par ladite unité à compresseur de complément (8) et ledit moteur électrique (7), est apte à être fixé, de façon démontable, au châssis d'un véhicule utilitaire.

5. Système à compresseur selon la revendication 1,
**caractérisé en ce qu'**une unité de transmission (2) est disposée entre ledit moteur à combustion interne (1) et ladite unité à compresseur (3) afin d'adapter la gamme des vitesses de rotation de ladite unité à compresseur (3) à la gamme des vitesses de rotation dudit moteur à combustion interne (1).

6. Système à compresseur selon la revendication 1,
**caractérisé en ce qu'**une unité de transmission unit (9) est disposée entre ledit moteur électrique (7) et ladite unité à compresseur de complément (8) afin d'adapter la gamme des vitesses de rotation de ladite unité à compresseur de complément (8) à la gamme des vitesses de rotation dudit moteur électrique (7).

7. Système à compresseur selon une quelconque des revendications précédentes,
**caractérisé en ce que** ladite unité à compresseur (3) ainsi que ladite unité à compresseur de complément (8) se trouvent en communication avec un réservoir de l'air comprimé afin d'accumuler de l'air comprimé, qui est raccordé en aval par voie fluidique.

8. Système à compresseur selon la revendication 7,
**caractérisé en ce que**, quand ledit moteur à combustion interne se trouve hors service, le remplissage du réservoir de l'air comprimé (5) vide se fait jusqu'à un niveau suffisant de pression, qui est déterminable via ladite unité de commande (6), exclusivement en employant ladite unité à compresseur de complément (8) entraînée par ledit moteur électrique.

9. Système à compresseur selon la revendication 8,
**caractérisé en ce que** le remplissage du réservoir de l'air comprimé (5) se fait sous commande de synchronisation via ladite unité de commande (6).

10. Système à compresseur selon une quelconque des revendications précédentes,
**caractérisé en ce qu'**au cas de défaillance de ladite unité à compresseur (3) entraînée par ledit moteur à combustion interne, ladite unité de commande (6) couvre la demande en air comprimé dans la mesure d'une fonction de secours, au moins en partie, en commandant ladite unité à compresseur de complément (8) entraînée par ledit moteur électrique.

11. Système à compresseur selon une quelconque des revendications précédentes,
**caractérisé en ce que** ladite unité à compresseur de complément (8) entraînée par ledit moteur électrique est configurée sous forme d'une unité à compresseur à deux étages.

12. Système à compresseur selon une quelconque des revendications précédentes,
**caractérisé en ce que** ladite unité de commande (6) est apte à être intégrée dans l'unité électronique de traitement de l'air du véhicule utilitaire.
